# EUROPEAN PATENT SPECIFICATION

(11) **EP 4 501 281 B1**
(45) Date of publication and mention of the grant of the patent: **14.10.2026**
(21) Application number: 23884402.1
(22) Date of filing: 24.08.2023
(51) Int. Cl.: A61C 17/02, A61C 1/00, A61C 17/028

(54) **COMPACT LIQUID DISPENSING SYSTEM AND PORTABLE ORAL IRRIGATOR**
KOMPAKTES FLÜSSIGKEITSAUSLASSSYSTEM UND TRAGBARE MUNDDUSCHE
SYSTÈME DE SORTIE DE LIQUIDE COMPACT ET IRRIGATEUR BUCCAL PORTABLE

(30) Priority: 04.11.2022 CN 202222949493 U
(43) Date of publication of application: 05.02.2025
(73) Proprietor: Bixdo (SH) Healthcare Technology Co., Ltd., Shanghai 201100 (CN); Guangdong Bixdo Health Technology Co., Ltd., Foshan, Guangdong 528311 (CN)
(72) Inventor: FU, Jiaquan, Shanghai 201100 (CN)
(74) Representative: Canzler & Bergmeier Patentanwälte Partnerschaft mbB
(86) International application number: PCT/CN2023/114733
(87) International publication number: WO 2024/093465

(56) References cited:
- CN-A- 108 703 815
- CN-A- 110 269 707
- CN-A- 110 269 707
- CN-U- 210 931 972
- CN-U- 214 632 428
- CN-U- 216 823 741
- CN-U- 216 823 741
- CN-U- 218 652 097
- US-A1- 2008 008 979
- US-A1- 2017 049 530

## Description

### FIELD OF THE INVENTION

The present disclosure relates to the technical field of oral cleaning, and in particular, to a miniature liquid-outlet system and a portable dental irrigator.

### BACKGROUND OF THE INVENTION

As living standards improve, people are becoming increasingly conscious of oral hygiene. Among the various oral cleaning tools available on the market, dental irrigators have become essential household appliances, serving as substitutes for traditional dental floss. Their basic working principle involves using a pump to draw water from a water tank, and the extracted water is then sprayed through a nozzle at high pressure-several hundred to over a thousand times per minute. This powerful pulsating water stream effectively cleans food debris and dental plaque, and massages the gums, thereby enhancing oral health.

Consumers desire portable dental irrigators to be as compact as possible. However, current products still have relatively large dimensions due to the arrangement of components such as motors, gears, plungers, one-way valves, and nozzles from bottom to top. For example, CN 216 823 741 U discloses an oral irrigator including a main body, a nozzle, a reservoir, a liquid outlet check valve, and a pump body. The liquid outlet check valve is arranged in the infusion channel, allowing liquid in the infusion channel to flow toward the nozzle while preventing backflow from the nozzle into the infusion channel. Additionally, the sealing structure of current portable dental irrigators often attaches to the liquid pump cavity, leading to an overall bulky design.

Furthermore, current portable dental irrigators have small water tanks, resulting in limited usage time for irrigating, meanwhile increasing the size of the water tank reduces portability.

### SUMMARY OF THE INVENTION

The invention is as defined in the appended claims.

In view of the above-mentioned shortcomings, the present disclosure provides a miniature liquid-outlet system and a portable dental irrigator with a smaller overall structure, allowing for easier handling and portability, while also reducing liquid wastage before the flow peak, making it well-suited for small products like dental irrigators.

The miniature liquid-outlet system comprises a liquid pump device, a liquid-inlet flow channel, a liquid-outlet flow channel, a nozzle, and a liquid-tight structure.

The liquid pump device comprises a liquid pump cavity, a piston, and a piston rod. The piston is slidably disposed in the liquid pump cavity, and the piston rod extends through the liquid pump cavity in a liquid-tight manner and is connected to the piston. The piston divides a pump chamber of the liquid pump cavity into a rod chamber and a rodless chamber. The rodless chamber is in a negative pressure state when the piston performs a suction stroke, during which time a volume increase of the rodless chamber is greater than a volume decrease of the rod chamber. The piston comprises a liquid-outlet one-way valve allowing only liquid to flow from the rod chamber to the rodless chamber. An outer peripheral wall of the piston is provided with a mounting slot, an inner peripheral wall of the liquid pump cavity is provided with an assembling slot, and the mounting slot and the assembling slot are annular.

The liquid-inlet flow channel is communicated with the rod chamber through a liquid-inlet one-way valve.

The liquid-outlet flow channel is communicated with the rodless chamber.

The nozzle is detachably disposed in the liquid-outlet flow channel.

The liquid-tight structure comprises a first sealing ring, a second sealing ring, and a third sealing ring. The first sealing ring is embedded in the mounting slot and is slidably connected with the liquid pump cavity in a liquid-tight manner, the second sealing ring is embedded in the assembling slot and is slidably arranged around the piston rod in a liquid-tight manner, and the third sealing ring is embedded in the mounting slot and abuts a radial inner side of the first sealing ring.

Preferably, a maximum sealing pressure of the first sealing ring is greater than a maximum sealing pressure of the second sealing ring.

Preferably, the liquid pump cavity comprises an adapter and a piston tube embedded in the adapter, a liquid-supply temporary storage chamber communicated with the liquid-inlet flow channel is formed in the adapter, and a plurality of communication holes for communicating the rod chamber and the liquid-supply temporary storage chamber are formed in the piston tube.

Preferably, the liquid-outlet one-way valve comprises a liquid-outlet valve chamber, a liquid-outlet valve core, a liquid-outlet valve seat, and an over-flow limiting structure. The liquid-outlet valve chamber is formed in the piston, the liquid-outlet valve core is floatingly constrained in the liquid-outlet valve chamber, the liquid-outlet valve seat is formed in the piston and is disposed at a side of the liquid-outlet valve chamber away from the rodless chamber, and the liquid-outlet valve chamber is communicated with the rodless chamber through the over-flow limiting structure. The liquid-outlet valve seat is provided with an overflow hole for communicating the liquid-outlet valve chamber and the rod chamber. The liquid-outlet valve core abuts the liquid-outlet valve seat when the piston performs an exhaust stroke, and the liquid-outlet valve core is spaced apart from the liquid-outlet valve seat when the piston performs the suction stroke.

Preferably, the overflow hole comprises a confluence hole part extending in an axial direction of the piston and a plurality of branch hole parts extending in a radial direction of the piston, and the plurality of branch hole parts are communicated with the liquid-outlet valve chamber through the confluence hole part.

Preferably, an end of the piston facing the rod chamber is conical.

Preferably, a plug-in end of the nozzle, the liquid-outlet flow channel, and the pump chamber of the liquid pump cavity are coaxially disposed.

The portable dental irrigator comprises a miniature liquid-outlet system according to any one of the above embodiments.

As described above, the miniature liquid-outlet system and the portable dental irrigator of the present disclosure have several beneficial effects. The first innovation of the miniature liquid-outlet system lies in the setting of the liquid-outlet one-way valve. The liquid-outlet one-way valve is integrated in the internal structure of the piston within the liquid pump device. This integration saves installation space and reduces the height of the miniature liquid-outlet system, resulting in a more compact design. Such a system is particularly beneficial for small products like portable dental irrigators. The second innovation of the miniature liquid-outlet system involves achieving throttling by pulling back the piston through the piston rod to perform suction strokes. This system also comprises the nozzle communicated with the liquid-outlet flow channel. The rodless chamber is in a negative pressure state when the piston performs a suction stroke, during which time the volume increase of the rodless chamber is greater than the volume decrease of the rod chamber. As the piston moves downward, the negative pressure state of the rodless chamber allows it to create suction on the liquid inside the nozzle. This causes the liquid in the nozzle to flow back, compensating for the volume variation difference between the rodless chamber and the rod chamber, achieving throttling. When the suction stroke is complete, the nozzle's cavity is almost or partially empty. Afterward, the piston begins an exhaust stroke. Before a flow peak occurs in the liquid pump device, the nozzle's cavity is filled with liquid. As a result, the slower-moving portion of the liquid does not spray out from the nozzle until the flow peak occurs or is close to occurring. This approach not only maximizes the utilization of the liquid temporarily retained in the nozzle, saving liquid and extending the operational time for oral cleaning, but also reduces the liquid spray before the flow peak, achieving pre-peak throttling, enhancing the pulsation sensation and the effective utilization of liquid during oral cleaning for users. Additionally, the combined structure of the piston and the piston rod can be a two-stage stepped shaft structure. Since the piston rod occupies part of the space of the rod chamber, this design not only reduces the liquid supply to the liquid-inlet flow channel but also enhances the liquid pump device's ability to draw liquid from the nozzle. The third innovation of the miniature liquid-outlet system lies in the setting of the first sealing ring within the liquid-tight structure. The outer peripheral wall of the piston is provided with an annular mounting slot, and the first sealing ring is embedded in the mounting slot and is slidably connected with the liquid pump cavity in a liquid-tight manner, which reduces the wall thickness of the liquid pump cavity, eliminates stress from slot structures, and minimizes the axial dimension of the piston. This design not only reduces the girth but also minimizes the height of the system. Additionally, due to the piston having a larger diameter than the piston rod, there is some extra assembly clearance between the inner wall of the liquid pump cavity and the piston rod. To enhance the overall compactness of the liquid pump device and the liquid-tight structure, the inner peripheral wall of the liquid pump cavity is provided with an annular assembling slot. The liquid-tight structure further comprises a second sealing ring, and the second sealing ring is embedded in the assembling slot and is slidably arranged around the piston rod in a liquid-tight manner. To ensure effective liquid tightness between the first sealing ring and the liquid pump cavity, the liquid-tight structure further comprises a third sealing ring, and the third sealing ring is embedded in the mounting slot and abuts the radial inner side of the first sealing ring. As a result, the first sealing ring maintains a slideable connection with the liquid pump cavity in a liquid-tight manner, resiliently supported by the third sealing ring. Additionally, the first and third sealing rings together form a sealing ring assembly, with the first sealing ring responsible for minimizing friction. This configuration improves the overall compactness of the liquid pump device and the liquid-tight structure, ensuring efficient operation of the liquid pump device. Therefore, the miniature liquid-outlet system has a smaller overall structure, allowing for easier handling and portability, while also reducing liquid wastage before the flow peak, making it well-suited for small products like dental irrigators.

### BRIEF DESCRIPTION OF DRAWINGS

FIG. 1 shows a front view of a miniature liquid-outlet system according to the present disclosure.
FIG. 2 shows a cross-sectional view along A-A in FIG. 1.
FIG. 3 shows an enlarged view of part B in FIG. 2 when the piston performs a suction stroke.
FIG. 4 shows an enlarged view of part B in FIG. 2 when the piston performs an exhaust stroke.

### Reference Numerals

- 1: Liquid pump device
- 11: Liquid pump cavity
- 111: Adapter
- 111a: Liquid-supply temporary storage chamber
- 112: Piston tube
- 112a: Communication hole
- 113: Assembling slot
- 12: Piston
- 121: Mounting slot
- 13: Piston rod
- 14: Rod chamber
- 15: Rodless chamber
- 16: Transmission mechanism
- 17: Driving mechanism
- 2: Liquid-outlet one-way valve
- 21: Liquid-outlet valve chamber
- 22: Liquid-outlet valve core
- 23: Liquid-outlet valve seat
- 231: Overflow hole
- 231a: Confluence hole part
- 231b: Branch hole part
- 24: Over-flow limiting structure
- 3: Liquid-inlet flow channel
- 4: Liquid-inlet one-way valve
- 5: Liquid-outlet flow channel
- 6: Nozzle
- 61: Plug-in end
- 7: Liquid-tight structure
- 71: First sealing ring
- 72: Second sealing ring
- 73: Third sealing ring

### DETAILED DESCRIPTION OF THE INVENTION

The embodiments of the present disclosure will be described below. Those skilled can easily understand disclosure advantages and effects of the present disclosure according to contents disclosed by the specification.

It should be noted that the structure, ratio, size, etc. shown in the accompanying drawings in this specification are only used to illustrate the content disclosed in the specification for the understanding and reading of those familiar with this technology, and are not intended to limit the implementation of the present invention. Any structural modification, proportional relationship change or size adjustment should still fall within the scope of the present disclosure, given that no effect and objective achievable by the present disclosure are hindered. Terms such as "upper", "lower", "left", "right", "middle", and "a" used in this specification are only for ease of description, and they are not intended to limit the scope of implementation of the present disclosure. Any change or adjustment of corresponding relative relationships without any substantial technical change should be regarded as within the scope of the implementation of the present disclosure.

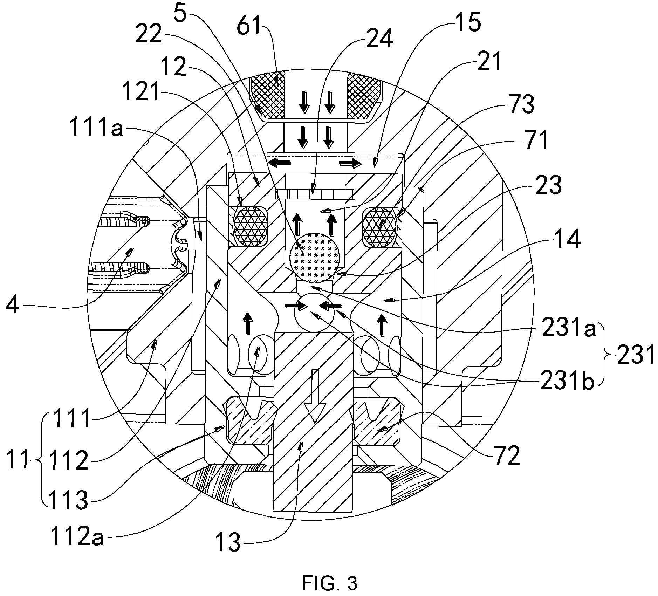

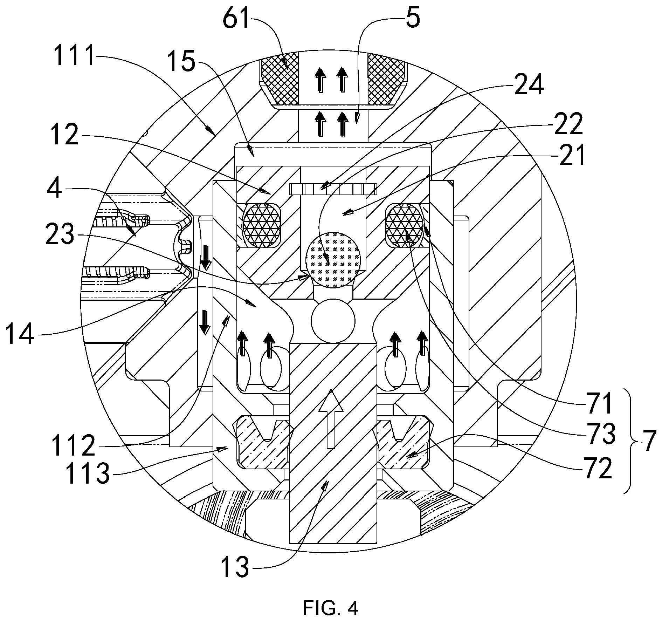

In FIGs. 3 and 4, non-solid arrows indicate a movement direction of a piston 12, and solid arrows indicate a flow direction of liquid.

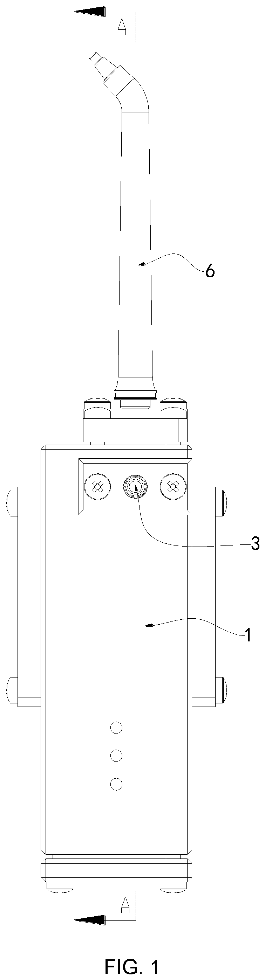

As shown in FIGs. 1, 2, 3 and 4, the present disclosure provides a miniature liquid-outlet system. The miniature liquid-outlet system comprises a liquid pump device 1, a liquid-inlet flow channel 3, a liquid-outlet flow channel 5, a nozzle 6, and a liquid-tight structure 7.

The liquid pump device 1 comprises a liquid pump cavity 11, a piston 12, and a piston rod 13. The piston 12 is slidably disposed in the liquid pump cavity 11, and the piston rod 13 extends through the liquid pump cavity 11 in a liquid-tight manner and is connected to the piston 12. The piston 12 divides a pump chamber of the liquid pump cavity 11 into a rod chamber 14 and a rodless chamber 15. The rodless chamber 15 is in a negative pressure state when the piston 12 performs a suction stroke, during which time a volume increase of the rodless chamber 15 is greater than a volume decrease of the rod chamber 14. The piston 12 comprises a liquid-outlet one-way valve 2 allowing only liquid to flow from the rod chamber 14 to the rodless chamber 15. An outer peripheral wall of the piston 12 is provided with a mounting slot 121, an inner peripheral wall of the liquid pump cavity 11 is provided with an assembling slot 113, and the mounting slot 121 and the assembling slot 113 are annular.

The liquid-inlet flow channel 3 is communicated with the rod chamber 14 through a liquid-inlet one-way valve 4.

The liquid-outlet flow channel 5 is communicated with the rodless chamber 15.

The nozzle 6 is detachably disposed in the liquid-outlet flow channel 5.

The liquid-tight structure 7 comprises a first sealing ring 71, a second sealing ring 72, and a third sealing ring 73. The first sealing ring 71 is embedded in the mounting slot 121 and is slidably connected with the liquid pump cavity 11 in a liquid-tight manner, the second sealing ring 72 is embedded in the assembling slot 113 and is slidably arranged around the piston rod 13 in a liquid-tight manner, and the third sealing ring 73 is embedded in the mounting slot 121 and abuts a radial inner side of the first sealing ring 71.

Referring to FIG. 3, when the piston 12 is pulled back through the piston rod 13 to perform a suction stroke, an internal pressure of the rod chamber 14 increases and an internal pressure of the rodless chamber 15 decreases, during which time the liquid-inlet one-way valve 4 is switched to a closed state and the liquid-outlet one-way valve 2 is switched to an open state, such that liquid in the rod chamber 14 can overcome a closing pre-tightening force of the liquid-outlet one-way valve 2 and flow into the rodless chamber 15.

Referring to FIG. 4, when the piston 12 is pushed out through the piston rod 13 to perform the exhaust stroke, the internal pressure of the rod chamber 14 decreases and the internal pressure of the rodless chamber 15 increases, the liquid-inlet one-way valve 4 is switched to an open state, and liquid in the liquid-inlet flow channel 3 can overcome a closing pre-tightening force of the liquid-inlet one-way valve 4 and flow into the rod chamber 14, during which time the liquid-outlet one-way valve 2 is switched to a closed state, and liquid in the rodless chamber 15 is squeezed into the liquid-outlet flow channel 5 through the piston 12.

The first innovation of the miniature liquid-outlet system lies in the setting of the liquid-outlet one-way valve 2. The liquid-outlet one-way valve 2 is integrated in an internal structure of the piston 12 within the liquid pump device 1. This integration saves installation space and reduces the height of the miniature liquid-outlet system, resulting in a more compact design. Such a system is particularly beneficial for small products like portable dental irrigators.

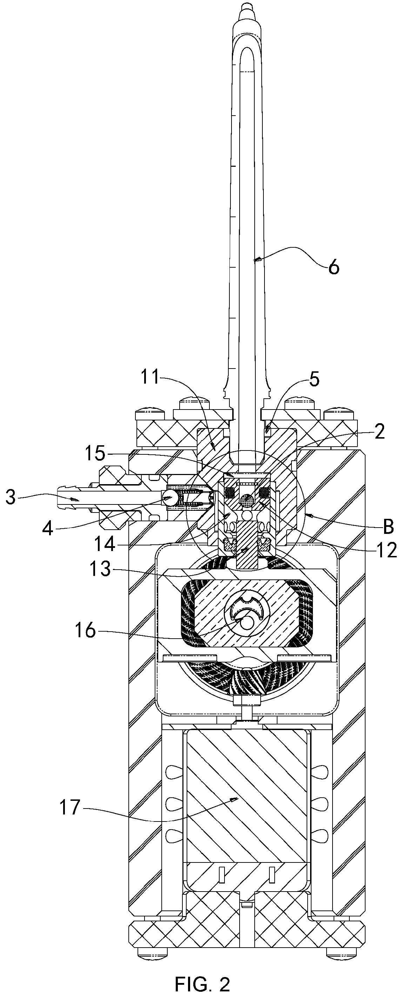

As shown in FIGs. 2 and 3, the second innovation of the miniature liquid-outlet system involves achieving throttling by pulling back the piston through the piston rod 12 to perform the suction stroke. The miniature liquid-outlet system also comprises the nozzle 6 communicated with the liquid-outlet flow channel 5. The rodless chamber 15 is in the negative pressure state when the piston 12 performs the suction stroke, during which time the volume increase of the rodless chamber 15 is greater than the volume decrease of the rod chamber 14. As the piston 12 moves downward, the negative pressure state of the rodless chamber 15 allows it to create suction on liquid inside the nozzle 6. This causes the liquid in the nozzle 6 to flow back, compensating for the volume variation difference between the rodless chamber 15 and the rod chamber 14, achieving throttling. When the suction stroke is complete, the nozzle's cavity is almost or partially empty. Afterward, the piston 12 begins the exhaust stroke. Before the flow peak occurs in the liquid pump device 1, the nozzle's cavity is filled with liquid. As a result, the slower-moving portion of the liquid does not spray out from the nozzle 6 until the flow peak occurs or is close to occurring. This approach not only maximizes the utilization of the liquid temporarily retained in the nozzle 6, saving liquid and extending the operational time for oral cleaning, but also reduces the liquid spray before the flow peak occurs in the liquid pump device 1, achieving pre-peak throttling, enhancing the pulsation sensation and the effective utilization of liquid during oral cleaning for users. Additionally, the combined structure of the piston 12 and the piston rod 13 can be a two-stage stepped shaft structure. Since the piston rod 13 occupies part of space of the rod chamber 14, this design not only reduces the liquid supply to the liquid-inlet flow channel 3 but also enhances the liquid pump device's ability to draw liquid from the nozzle 6.

The third innovation of the miniature liquid-outlet system lies in the overall arrangement of the first sealing ring 71, the second sealing ring 72 and the third sealing ring 73 of the liquid-tight structure 7. The outer peripheral wall of the piston 12 is provided with the annular mounting slot 121, and the first sealing ring 71 is embedded in the mounting slot 121 and is slidably connected with the liquid pump cavity 11 in a liquid-tight manner, which reduces the wall thickness of the liquid pump cavity 11, eliminates stress from slot structures, and minimizes the axial dimension of the piston 12. This design not only reduces the girth but also minimizes the height of the system. Additionally, due to the piston 12 having a larger diameter than the piston rod 13, there is some extra assembly clearance between the inner peripheral wall of the liquid pump cavity 11 and the piston rod 13. To enhance the overall compactness of the liquid pump device 1 and the liquid-tight structure 7, the inner peripheral wall of the liquid pump cavity 11 is provided with the annular assembling slot 113. The liquid-tight structure 7 also comprises the second sealing ring 72, and the second sealing ring 72 is embedded in the assembling slot 113 and is slidably arranged around the piston rod 13 in a liquid-tight manner. Further, in order to facilitate embedding the second sealing ring 72, a cross section of the assembling slot 113 is C-shaped; in order to improve the liquid tightness, a cross section of the second sealing ring 72 is V-shaped, and the second sealing ring 72 has an opening facing the rod chamber 14. To ensure effective liquid tightness between the first sealing ring 71 and the liquid pump cavity 11, the liquid-tight structure 7 further comprises the third sealing ring 73, and the third sealing ring 73 is embedded in the mounting slot 121 and abuts the radial inner side of the first sealing ring 71. A cross section of the third sealing ring 73 is circular, and a cross section of the first sealing ring 71 is flat, so that the first sealing ring 71 maintains a slideable connection with the liquid pump cavity 11 in a liquid-tight manner, resiliently supported by the third sealing ring 73. Additionally, the first and third sealing rings 71, 73 together form a sealing ring assembly, with the first sealing ring 71 responsible for minimizing friction. The first sealing ring 71 is generally made of polytetrafluoroethylene (PTFE) materials, carbon fiber (CF) materials, and carbon (C) materials. The third sealing ring 73 is resilient. This configuration improves the overall compactness of the liquid pump device 1 and the liquid-tight structure 7, ensuring efficient operation of the liquid pump device 1.

The miniature liquid-outlet system of the present disclosure can save space for installing the liquid-outlet one-way valve, reduce the liquid spray before the flow peak occurs in the liquid pump device 1, and make the overall system more compact and convenient for users to hold and carry. The miniature liquid-outlet system has a smaller overall structure, allowing for easier handling and portability, while also reducing liquid wastage before the flow peak, making it well-suited for small products like dental irrigators.

As shown in FIG. 2, the liquid pump device 1 further comprises a transmission mechanism 16 and a driving mechanism 17, and the piston rod 13 is in transmission connection with the driving mechanism 17 through the transmission mechanism 16 The driving mechanism 17 drives the piston rod 13 in a reciprocating motion.

The liquid pump device 1 may be a plunger pump; the transmission mechanism 16 and the driving mechanism 17 may both be existing mechanisms; the transmission mechanism 16 may be an eccentric wheel assembly, and the driving mechanism 17 may be a motor assembly.

The liquid-inlet one-way valve 4 and the liquid-outlet one-way valve 2 may be ball valves (with reset springs) or valve plates.

Further, a maximum sealing pressure of the first sealing ring 71 is greater than a maximum sealing pressure of the second sealing ring 72. The liquid-tight structure acting on the piston 12 has been redesigned from the traditional single-tight component into two separate components: a high-pressure sealing ring and a low-pressure sealing ring. The first sealing ring 71 can withstand high pressure, and while a small amount of leakage is acceptable, it doesn't affect its function. This design reduces the tightness requirements for the high-pressure sealing ring. On the other hand, no leakage is allowed for the second sealing ring 72. Since the second sealing ring 72 operates at lower pressure, it significantly improves the overall working conditions and greatly extends its service life. Unlike existing dental irrigators that only use high-pressure sealing rings, which must withstand significant pressure while preventing leaks, the miniature liquid-outlet system of the present disclosure lowers the performance demands for the sealing rings and effectively prolongs their lifespan.

As shown in FIG. 4, in order to facilitate the smooth introduction of the liquid in the liquid-inlet flow channel 3 into the rod chamber 14, the liquid pump cavity 11 comprises an adapter 111 and a piston tube 112 embedded in the adapter 111, a liquid-supply temporary storage chamber 111a communicated with the liquid-inlet flow channel 3 is formed in the adapter 111, and a plurality of communication holes 112a for communicating the rod chamber 14 and the liquid-supply temporary storage chamber 111a are formed in the piston tube 112. Specifically, all the communication holes 112a are arranged in a circular array centered around an axis of the piston tube 112.

To simplify the liquid-outlet one-way valve 2 and ensure that it relies solely on the reciprocating motion of the piston 12 to switch between its open and closed states, the liquid-outlet one-way valve 2 comprises a liquid-outlet valve chamber 21, a liquid-outlet valve core 22, a liquid-outlet valve seat 23, and an over-flow limiting structure (such as retaining rings) 24. The liquid-outlet valve chamber 21 is formed in the piston 12, the liquid-outlet valve core 22 is floatingly constrained in the liquid-outlet valve chamber 21, the liquid-outlet valve seat 23 is formed in the piston 12 and is disposed at a side of the liquid-outlet valve chamber 21 away from the rodless chamber 15, and the liquid-outlet valve chamber 21 is communicated with the rodless chamber 15 through the over-flow limiting structure 24. The liquid-outlet valve seat 23 is provided with an overflow hole 231 for communicating the liquid-outlet valve chamber 21 and the rod chamber 14. The liquid-outlet valve core 22 abuts the liquid-outlet valve seat 23 when the piston 12 performs the exhaust stroke, and the liquid-outlet valve core 22 is spaced apart from the liquid-outlet valve seat 23 when the piston 12 performs the suction stroke.

When the piston 12 is pulled back through the piston rod 13 to perform the suction stroke, the liquid-inlet one-way valve 4 is switched to the closed state, and the liquid-outlet one-way valve 2 is switched to the open state. Specifically, as the piston 12 moves downwards, the rod chamber 14 becomes smaller, and the internal pressure of the rod chamber 14 increases, and since the liquid-inlet one-way valve 4 opens from the liquid-inlet flow channel 3 to the rod chamber 14, the liquid-inlet one-way valve 4 remains in the closed state. Specifically, as the piston 12 moves downwards, the liquid in the rod chamber 14 is squeezed towards the overflow hole 231, and the liquid-outlet valve core 22 of the liquid-outlet one-way valve 2 is pushed open by the liquid, during which time the liquid in the rod chamber 14 flows into the rodless chamber 15 through the liquid-outlet valve chamber 21.

When the piston 12 is pushed out through the piston rod 13 to perform the exhaust stroke, the liquid-inlet one-way valve 4 is switched to the open state, and the liquid-outlet one-way valve 2 is switched to the closed state. Specifically, as the piston 12 moves upwards, the rod chamber 14 becomes larger, and the internal pressure of the rod chamber 14 decreases, and since the liquid-inlet one-way valve 4 opens from the liquid-inlet flow channel 3 to the rod chamber 14, the liquid-inlet one-way valve 4 is opened by the liquid in the liquid-inlet flow channel 3, and then the liquid flows into the rod chamber 14. Specifically, since the piston 12 is used to push liquid out of the rodless chamber 15, the internal pressure of the rodless chamber 15 increases, such that the liquid-outlet valve core 22 of the liquid-outlet one-way valve 2 abuts the liquid-outlet valve seat 23 in a liquid-tight manner, blocking the overflow hole 231. The liquid in the rodless chamber 15 is squeezed by the piston 12, and is sprayed out of the nozzle 6 via the liquid-outlet flow channel 5. In other words, when the piston 12 performs the exhaust stroke, the liquid-inlet process in the rod chamber 14 happens simultaneously with the liquid-outlet process in the rodless chamber 15.

To facilitate faster and smoother flow of the liquid in the rod chamber 14 into the liquid-outlet valve chamber 21, as shown in FIG. 3, the overflow hole 231 comprises a confluence hole part 231a extending in an axial direction of the piston 12 and a plurality of branch hole parts 231b extending in a radial direction of the piston 12, and the plurality of branch hole parts 231b are communicated with the liquid-outlet valve chamber 21 through the confluence hole part 231a. Specifically, the overflow hole 231 comprises four branch hole parts 231b distributed in a cross form.

Preferably, an end of the piston 12 facing the rod chamber 14 is conical. When the piston 12 moves downward to its limit position, the liquid-inlet one-way valve 4 and the rod chamber 14 keep connected. Specifically, when the piston 12 moves downward to its limit position, the piston 12 does not block the plurality of communication holes 112a of the piston tube 112.

To make the fluid flow between the nozzle 6 and the rodless chamber 15 more smooth, a plug-in end 61 of the nozzle 6, the liquid-outlet flow channel 5, and the pump chamber of the liquid pump cavity 11 are coaxially disposed.

The present disclosure further provides a portable dental irrigator, which comprises a miniature liquid-outlet system according to any one of the above embodiments.

The portable dental irrigator can easily fit into pockets, waist packs, and is comfortable to hold. This greatly improves its portability during travel and usability.

In summary, the miniature liquid-outlet system and the portable dental irrigator of the present disclosure have a smaller overall structure, allowing for easier handling and portability, while also reducing liquid wastage before the flow peak, making it well-suited for small products like dental irrigators. Therefore, the present disclosure effectively overcomes various shortcomings of the prior art and has a high industrial value.

The above-mentioned embodiments are merely illustrative of the principle and effects of the present disclosure instead of limiting the present disclosure. Those skilled in the art can make modifications or changes to the above-mentioned embodiments without going against the spirit and the range of the present disclosure. Therefore, all equivalent modifications or changes made by those who have common knowledge in the art without departing from the spirit and technical concept disclosed by the present disclosure shall be still covered by the claims of the present disclosure.

## Claims

1. A miniature liquid-outlet system, comprising:
a liquid pump device (1) comprising a liquid pump cavity (11), a piston (12) and a piston rod (13), wherein the piston (12) is slidably disposed in the liquid pump cavity (11), and the piston rod (13) extends through the liquid pump cavity (11) in a liquid-tight manner and is connected to the piston (12); wherein the piston (12) divides a pump chamber of the liquid pump cavity (11) into a rod chamber (14) and a rodless chamber (15);
a liquid-inlet flow channel (3);
a liquid-outlet flow channel (5) communicated with the rodless chamber (15);
a nozzle (6) detachably disposed in the liquid-outlet flow channel (5); and
a liquid-tight structure (7),
**characterized in that** the rodless chamber (15) is in a negative pressure state when the piston (12) performs a suction stroke, during which time a volume increase of the rodless chamber (15) is greater than a volume decrease of the rod chamber (14); wherein the piston (12) comprises a liquid-outlet one-way valve (2) allowing only liquid to flow from the rod chamber (14) to the rodless chamber (15); wherein an outer peripheral wall of the piston (12) is provided with a mounting slot (121), an inner peripheral wall of the liquid pump cavity (11) is provided with an assembling slot (113), and the mounting slot (121) and the assembling slot (113) are annular;
wherein the liquid-inlet flow channel (3) is communicated with the rod chamber (14) through a liquid-inlet one-way valve (4);
wherein the liquid-tight structure (7) comprises a first sealing ring (71), a second sealing ring (72) and a third sealing ring (73), wherein the first sealing ring (71) is embedded in the mounting slot (121) and is slidably connected with the liquid pump cavity (11) in a liquid-tight manner, the second sealing ring (72) is embedded in the assembling slot (113) and is slidably arranged around the piston rod (13) in a liquid-tight manner, and the third sealing ring (73) is embedded in the mounting slot (121) and abuts a radial inner side of the first sealing ring (71);
wherein, when the piston (12) is pulled back through the piston rod (13) to perform a suction stroke, the liquid-inlet one-way valve (4) is switched to a closed state and the liquid-outlet one-way valve (2) is switched to an open state, such that liquid in the rod chamber (14) overcomes a closing pre-tightening force of the liquid-outlet one-way valve 2 and flows into the rodless chamber (15);
wherein, when the piston (12) is pushed out through the piston rod (13) to perform the exhaust stroke, the liquid-inlet one-way valve (4) is switched to an open state and the liquid-outlet one-way valve (2) is switched to a closed state, such that liquid in the liquid-inlet flow channel (3) overcomes a closing pre-tightening force of the liquid-inlet one-way valve (4) and flows into the rod chamber (14), and liquid in the rodless chamber (15) is squeezed into the liquid-outlet flow channel (5) through the piston (12).

2. The miniature liquid-outlet system according to claim 1, wherein a maximum sealing pressure of the first sealing ring (71) is greater than a maximum sealing pressure of the second sealing ring (72).

3. The miniature liquid-outlet system according to claim 1, wherein the liquid pump cavity (11) comprises an adapter (111) and a piston tube (112) embedded in the adapter (111), a liquid-supply temporary storage chamber (111a) communicated with the liquid-inlet flow channel (3) is formed in the adapter (111), and a plurality of communication holes for communicating the rod chamber (14) and the liquid-supply temporary storage chamber (111a) are formed in the piston tube (112).

4. The miniature liquid-outlet system according to claim 1, wherein the liquid-outlet one-way valve (2) comprises a liquid-outlet valve chamber (21), a liquid-outlet valve core (22), a liquid-outlet valve seat (23), and an over-flow limiting structure (24), wherein the liquid-outlet valve chamber (21) is formed in the piston (12), the liquid-outlet valve core (22) is floatingly constrained in the liquid-outlet valve chamber (21), the liquid-outlet valve seat (23) is formed in the piston (12) and is disposed at a side of the liquid-outlet valve chamber (21) away from the rodless chamber (15), and the liquid-outlet valve chamber (21) is communicated with the rodless chamber (15) through the over-flow limiting structure (24); wherein the liquid-outlet valve seat (23) is provided with an overflow hole (231) for communicating the liquid-outlet valve chamber (21) and the rod chamber (14); wherein the liquid-outlet valve core (22) abuts the liquid-outlet valve seat (23) when the piston (12) performs an exhaust stroke, and the liquid-outlet valve core (22) is spaced apart from the liquid-outlet valve seat (23) when the piston (12) performs the suction stroke.

5. The miniature liquid-outlet system according to claim 4, wherein the overflow hole (231) comprises a confluence hole part (231a) extending in an axial direction of the piston (12) and a plurality of branch hole parts (231b) extending in a radial direction of the piston (12), and the plurality of branch hole parts (231b) are communicated with the liquid-outlet valve chamber (21) through the confluence hole part (231a).

6. The miniature liquid-outlet system according to claim 1, wherein an end of the piston (12) facing the rod chamber (14) is conical.

7. The miniature liquid-outlet system according to claim 1, wherein a plug-in end (61) of the nozzle (6), the liquid-outlet flow channel (5), and the pump chamber of the liquid pump cavity (11) are coaxially disposed.

8. A portable dental irrigator, wherein the portable dental irrigator comprises a miniature liquid-outlet system according to any one of claims 1-7.

## Patentansprüche

1. Miniatur-Flüssigkeitsauslasssystem, umfassend:
eine Flüssigkeitspumpvorrichtung (1), umfassend einen Flüssigkeitspumphohlraum (11), einen Kolben (12) und eine Kolbenstange (13), wobei der Kolben (12) verschiebbar in dem Flüssigkeitspumphohlraum (11) angeordnet ist und die Kolbenstange (13) sich flüssigkeitsdicht durch den Flüssigkeitspumphohlraum (11) erstreckt und mit dem Kolben (12) verbunden ist; wobei der Kolben (12) eine Pumpkammer des Flüssigkeitspumphohlraums (11) in eine Stangenkammer (14) und eine stangenlose Kammer (15) unterteilt;
einen Flüssigkeitseinlassströmungskanal (3);
einen Flüssigkeitsauslassströmungskanal (5), der mit der stangenlosen Kammer (15) in Verbindung steht;
eine Düse (6), die lösbar in dem Flüssigkeitsauslassströmungskanal (5) angeordnet ist; und
eine flüssigkeitsdichte Struktur (7),
**dadurch gekennzeichnet, dass** sich die stangenlose Kammer (15) in einem Unterdruckzustand befindet, wenn der Kolben (12) einen Saughub ausführt, wobei während dieser Zeit eine Volumenzunahme der stangenlosen Kammer (15) größer als eine Volumenabnahme der Stangenkammer (14) ist; wobei der Kolben (12) ein Flüssigkeitsauslass-Einwegventil (2) umfasst, das nur Flüssigkeit von der Stangenkammer (14) zu der stangenlosen Kammer (15) strömen lässt; wobei eine Außenumfangswand des Kolbens (12) mit einem Montageschlitz (121) versehen ist, eine Innenumfangswand des Flüssigkeitspumphohlraums (11) mit einem Montageschlitz (113) versehen ist und der Montageschlitz (121) und der Montageschlitz (113) ringförmig sind;
wobei der Flüssigkeitseinlassströmungskanal (3) durch ein Flüssigkeitseinlass-Einwegventil (4) mit der Stangenkammer (14) in Verbindung steht;
wobei die flüssigkeitsdichte Struktur (7) einen ersten Dichtungsring (71), einen zweiten Dichtungsring (72) und einen dritten Dichtungsring (73) umfasst, wobei der erste Dichtungsring (71) in dem Montageschlitz (121) eingebettet ist und flüssigkeitsdicht verschiebbar mit dem Flüssigkeitspumphohlraum (11) verbunden ist, der zweite Dichtungsring (72) in dem Montageschlitz (113) eingebettet ist und flüssigkeitsdicht verschiebbar um die Kolbenstange (13) angeordnet ist und der dritte Dichtungsring (73) in dem Montageschlitz (121) eingebettet ist und an einer radialen Innenseite des ersten Dichtungsrings (71) anliegt;
wobei, wenn der Kolben (12) durch die Kolbenstange (13) zurückgezogen wird, um einen Saughub auszuführen, das Flüssigkeitseinlass-Einwegventil (4) in einen geschlossenen Zustand geschaltet wird und das Flüssigkeitsauslass-Einwegventil (2) in einen offenen Zustand geschaltet wird, so dass Flüssigkeit in der Stangenkammer (14) eine Schließvorspannkraft des Flüssigkeitsauslass-Einwegventils 2 überwindet und in die stangenlose Kammer (15) strömt;
wobei, wenn der Kolben (12) durch die Kolbenstange (13) herausgeschoben wird, um den Ausstoßhub auszuführen, das Flüssigkeitseinlass-Einwegventil (4) in einen offenen Zustand geschaltet wird und das Flüssigkeitsauslass-Einwegventil (2) in einen geschlossenen Zustand geschaltet wird, so dass Flüssigkeit in dem Flüssigkeitseinlassströmungskanal (3) eine Schließvorspannkraft des Flüssigkeitseinlass-Einwegventils (4) überwindet und in die Stangenkammer (14) strömt, und Flüssigkeit in der stangenlosen Kammer (15) durch den Kolben (12) in den Flüssigkeitsauslassströmungskanal (5) gedrückt wird.

2. Miniatur-Flüssigkeitsauslasssystem nach Anspruch 1, wobei ein maximaler Dichtungsdruck des ersten Dichtungsrings (71) größer als ein maximaler Dichtungsdruck des zweiten Dichtungsrings (72) ist.

3. Miniatur-Flüssigkeitsauslasssystem nach Anspruch 1, wobei der Flüssigkeitspumphohlraum (11) einen Adapter (111) und ein in dem Adapter (111) eingebettetes Kolbenrohr (112) umfasst, eine Flüssigkeitszufuhrzwischenspeicherkammer (111a), die mit dem Flüssigkeitseinlassströmungskanal (3) in Verbindung steht, in dem Adapter (111) ausgebildet ist und mehrere Verbindungslöcher zum Verbinden der Stangenkammer (14) und der Flüssigkeitszufuhrzwischenspeicherkammer (111a) in dem Kolbenrohr (112) ausgebildet sind.

4. Miniatur-Flüssigkeitsauslasssystem nach Anspruch 1, wobei das Flüssigkeitsauslass-Einwegventil (2) eine Flüssigkeitsauslassventilkammer (21), einen Flüssigkeitsauslassventilkern (22), einen Flüssigkeitsauslassventilsitz (23) und eine Überlaufbegrenzungsstruktur (24) umfasst, wobei die Flüssigkeitsauslassventilkammer (21) in dem Kolben (12) ausgebildet ist, der Flüssigkeitsauslassventilkern (22) in der Flüssigkeitsauslassventilkammer (21) schwimmend beschränkt ist, der Flüssigkeitsauslassventilsitz (23) in dem Kolben (12) ausgebildet ist und an einer Seite der Flüssigkeitsauslassventilkammer (21) entfernt von der stangenlosen Kammer (15) angeordnet ist und die Flüssigkeitsauslassventilkammer (21) durch die Überlaufbegrenzungsstruktur (24) mit der stangenlosen Kammer (15) in Verbindung steht; wobei der Flüssigkeitsauslassventilsitz (23) mit einem Überlaufloch (231) zum Verbinden der Flüssigkeitsauslassventilkammer (21) und der Stangenkammer (14) versehen ist; wobei der Flüssigkeitsauslassventilkern (22) an dem Flüssigkeitsauslassventilsitz (23) anliegt, wenn der Kolben (12) einen Ausstoßhub ausführt, und der Flüssigkeitsauslassventilkern (22) von dem Flüssigkeitsauslassventilsitz (23) beabstandet ist, wenn der Kolben (12) den Saughub ausführt.

5. Miniatur-Flüssigkeitsauslasssystem nach Anspruch 4, wobei das Überlaufloch (231) einen Zusammenflusslochteil (231a), der sich in einer axialen Richtung des Kolbens (12) erstreckt, und mehrere Zweiglochteile (231b), die sich in einer radialen Richtung des Kolbens (12) erstrecken, umfasst und die mehreren Zweiglochteile (231b) durch den Zusammenflusslochteil (231a) mit der Flüssigkeitsauslassventilkammer (21) in Verbindung stehen.

6. Miniatur-Flüssigkeitsauslasssystem nach Anspruch 1, wobei ein Ende des Kolbens (12), das der Stangenkammer (14) zugewandt ist, konisch ist.

7. Miniatur-Flüssigkeitsauslasssystem nach Anspruch 1, wobei ein Einsteckende (61) der Düse (6), der Flüssigkeitsauslassströmungskanal (5) und die Pumpkammer des Flüssigkeitspumphohlraums (11) koaxial angeordnet sind.

8. Tragbares Zahnspülgerät, wobei das tragbare Zahnspülgerät ein Miniatur-Flüssigkeitsauslasssystem nach einem der Ansprüche 1-7 umfasst.

## Revendications

1. Système de sortie de liquide miniature , comprenant :
un dispositif de pompage de liquide (1) comprenant une cavité de pompage de liquide (11), un piston (12) et une tige de piston (13), dans lequel le piston (12) est disposé de manière coulissante dans la cavité de pompage de liquide (11), et la tige de piston (13) s'étend à travers la cavité de pompage de liquide (11) d'une manière étanche au liquide et est reliée au piston (12) ; dans lequel le piston (12) divise une chambre de pompage de la cavité de pompage de liquide (11) en une chambre de tige (14) et une chambre sans tige (15) ;
un canal de flux d'entrée de liquide (3) ;
un canal de flux de sortie de liquide (5) communiquant avec la chambre sans tige (15) ;
une buse (6) disposée de manière détachable dans le canal de flux de sortie de liquide (5) ; et
une structure étanche au liquide (7),
**caractérisé en ce que** la chambre sans tige (15) est dans un état de dépression lorsque le piston (12) effectue une course d'aspiration, pendant laquelle une augmentation de volume de la chambre sans tige (15) est supérieure à une réduction de volume de la chambre de tige (14) ; dans lequel le piston (12) comprend une soupape unidirectionnelle de sortie de liquide (2) permettant uniquement au liquide de s'écouler de la chambre de tige (14) à la chambre sans tige (15) ; dans lequel une paroi périphérique externe du piston (12) est pourvue d'une fente de montage (121), une paroi périphérique interne de la cavité de pompage de liquide (11) est pourvue d'une fente d'assemblage (113), et la fente de montage (121) et la fente d'assemblage (113) sont annulaires ;
dans lequel le canal de flux d'entrée de liquide (3) communique avec la chambre de tige (14) à travers une soupape unidirectionnelle d'entrée de liquide (4) ;
dans lequel la structure étanche au liquide (7) comprend une première bague d'étanchéité (71), une deuxième bague d'étanchéité (72) et une troisième bague d'étanchéité (73), dans lequel la première bague d'étanchéité (71) est encastrée dans la fente de montage (121) et est reliée de manière coulissante à la cavité de pompage de liquide (11) d'une manière étanche au liquide, la deuxième bague d'étanchéité (72) est encastrée dans la fente d'assemblage (113) et est agencée de manière coulissante autour de la tige de piston (13) d'une manière étanche au liquide, et la troisième bague d'étanchéité (73) est encastrée dans la fente de montage (121) et vient en butée contre un côté interne radial de la première bague d'étanchéité (71) ;
dans lequel, lorsque le piston (12) est tiré en arrière à travers la tige de piston (13) pour effectuer une course d'aspiration, la soupape unidirectionnelle d'entrée de liquide (4) est commutée dans un état fermé et la soupape unidirectionnelle de sortie de liquide (2) est commutée dans un état ouvert, de sorte que le liquide dans la chambre de tige (14) surmonte une force de pré-serrage de fermeture de la soupape unidirectionnelle de sortie de liquide (2) et s'écoule dans la chambre sans tige (15) ;
dans lequel, lorsque le piston (12) est poussé vers l'extérieur à travers la tige de piston (13) pour effectuer la course d'échappement, la soupape unidirectionnelle d'entrée de liquide (4) est commutée dans un état ouvert et la soupape unidirectionnelle de sortie de liquide (2) est commutée dans un état fermé, de sorte que le liquide dans le canal de flux d'entrée de liquide (3) surmonte une force de pré-serrage de fermeture de la soupape unidirectionnelle d'entrée de liquide (4) et s'écoule dans la chambre de tige (14), et le liquide dans la chambre sans tige (15) est comprimé dans le canal de flux de sortie de liquide (5) à travers le piston (12).

2. Système de sortie de liquide miniature selon la revendication 1, dans lequel une pression d'étanchéité maximale de la première bague d'étanchéité (71) est supérieure à une pression d'étanchéité maximale de la deuxième bague d'étanchéité (72).

3. Système de sortie de liquide miniature selon la revendication 1, dans lequel la cavité de pompage de liquide (11) comprend un adaptateur (111) et un tube de piston (112) encastré dans l'adaptateur (111), une chambre de stockage temporaire d'alimentation liquide (111a) communiquant avec le canal de flux d'entrée de liquide (3) est formée dans l'adaptateur (111), et une pluralité de trous de communication pour faire communiquer la chambre de tige (14) et la chambre de stockage temporaire d'alimentation liquide (111a) sont formés dans le tube de piston (112).

4. Système de sortie de liquide miniature selon la revendication 1, dans lequel la soupape unidirectionnelle de sortie de liquide (2) comprend une chambre de soupape de sortie de liquide (21), un noyau de soupape de sortie de liquide (22), un siège de soupape de sortie de liquide (23), et une structure de limitation de débordement (24), dans lequel la chambre de soupape de sortie de liquide (21) est formée dans le piston (12), le noyau de soupape de sortie de liquide (22) est contraint de manière flottante dans la chambre de soupape de sortie de liquide (21), le siège de soupape de sortie de liquide (23) est formé dans le piston (12) et est disposé au niveau d'un côté de la chambre de soupape de sortie de liquide (21) éloigné de la chambre sans tige (15), et la chambre de soupape de sortie de liquide (21) communique avec la chambre sans tige (15) à travers la structure de limitation de débordement (24) ; dans lequel le siège de soupape de sortie de liquide (23) est pourvu d'un trou de débordement (231) pour faire communiquer la chambre de soupape de sortie de liquide (21) et la chambre de tige (14) ; dans lequel le noyau de soupape de sortie de liquide (22) vient en butée contre le siège de soupape de sortie de liquide (23) lorsque le piston (12) effectue une course d'échappement, et le noyau de soupape de sortie de liquide (22) est espacé du siège de soupape de sortie de liquide (23) lorsque le piston (12) effectue la course d'aspiration.

5. Système de sortie de liquide miniature selon la revendication 4, dans lequel le trou de débordement (231) comprend une partie de trou de confluence (231a) s'étendant dans une direction axiale du piston (12) et une pluralité de parties de trou de ramification (231b) s'étendant dans une direction radiale du piston (12), et la pluralité de parties de trou de ramification (231b) communiquent avec la chambre de soupape de sortie de liquide (21) à travers la partie de trou de confluence (231a).

6. Système de sortie de liquide miniature selon la revendication 1, dans lequel une extrémité du piston (12) faisant face à la chambre de tige (14) est conique.

7. Système de sortie de liquide miniature selon la revendication 1, dans lequel une extrémité d'enfichage (61) de la buse (6), le canal de flux de sortie de liquide (5), et la chambre de pompage de la cavité de pompage de liquide (11) sont disposés de manière coaxiale.

8. Irrigateur dentaire portable, dans lequel l'irrigateur dentaire portable comprend un système de sortie de liquide miniature selon l'une quelconque des revendications 1 à 7.
